Europäisches Patentamt

European Patent Office

Office européen des brevets

(19)

(11) Numéro de publication : **0 133 128**
**B1**

(12) **FASCICULE DE BREVET EUROPÉEN**

(45) Date de publication du fascicule du brevet :
15.04.87

(51) Int. Cl.⁴ : **H 02 H   1/04, H 02 H   3/08**

(21) Numéro de dépôt : **84401561.0**

(22) Date de dépôt : **25.07.84**

(54) **Dispositif de protection à surintensité de courant.**

(30) Priorité : **25.07.83 FR 8312264**

(43) Date de publication de la demande :
**13.02.85 Bulletin 85/07**

(45) Mention de la délivrance du brevet :
**15.04.87 Bulletin 87/16**

(84) Etats contractants désignés :
**BE CH DE GB IT LI**

(56) Documents cités :
**DE-A- 1 815 200**
**DE-A- 2 334 165**
**DE-A- 2 446 447**
**FR-A- 2 239 791**

(73) Titulaire : **ELECTRICITE DE FRANCE Service National**
**2, rue Louis Murat**
**F-75008 Paris (FR)**

(72) Inventeur : **Nicolas, Bernard**
**Résidence du Petit Bel Ebat Pavillon 44**
**F-77210 Avon (FR)**

(74) Mandataire : **Fort, Jacques et al**
**CABINET PLASSERAUD 84, rue d'Amsterdam**
**F-75009 Paris (FR)**

Jouve, 18, rue St-Denis, 75001 Paris, France

**0 133 128**

## Description

L'invention a pour objet un dispositif de protection ampèremétrique sélectif à surintensité de courant, destiné à fonctionner en courant alternatif, du type comprenant des moyens de redressement des deux alternances et des moyens pour comparer la valeur instantanée du courant redressé et une valeur de seuil (s). Elle trouve une application particulièrement importante dans la protection des installations à très haute tension (notamment à la tension de 400 kV du réseau national français) contre les court-circuits.

L'un des inconvénients des dispositifs de protection existants est qu'ils risquent d'être sollicités aussi bien par l'appel de courant magnétisant intense en régime transitoire lors de la mise en tension de grosses machines, notamment de transformateurs de grande puissance, que par un courant de court-circuit. En conséquence, ces dispositifs existants entraînent des déclenchements intempestifs à la mise sous tension des transformateurs si l'on recherche un niveau de protection relativement bas, c'est-à-dire correspondant à un courant de court-circuit faible. Ces déclenchements intempestifs imposent aux transformateurs des contraintes supplémentaires du fait d'un nombre de mises sous tension supérieur à la normale et provoquent une usure prématurée des disjoncteurs de protection, du fait des manœuvres inutiles.

On connaît un dispositif de protection du type défini ci-dessus (DE-A-1 815 200). Le relais de protection à surintensité de ce dispositif est commandé en réponse au résultat d'une comparaison entre la valeur de crête d'une alternance positive, puis de l'alternance négative qui la suit. Les deux valeurs de crête sont à cet effet mémorisées. Cette solution ne permet pas de différencier de façon satisfaisante courants transitoires et courants de court-circuit. Le document DE-A-2 446 447 décrit une approche similaire. En cas de dépassement d'un seuil, il y a activation d'un premier monostable puis, en cas de dépassement du seuil nouveau au cours de l'alternance suivante, il y a activation d'un organe d'actionnement.

L'invention vise à fournir un dispositif de protection sélectif, effectuant une discrimination rapide entre les deux types de courants susceptibles d'apparaître et, par voie de conséquence, permettant d'adopter un niveau bas de protection sans risque de nombreux déclenchements intempestifs.

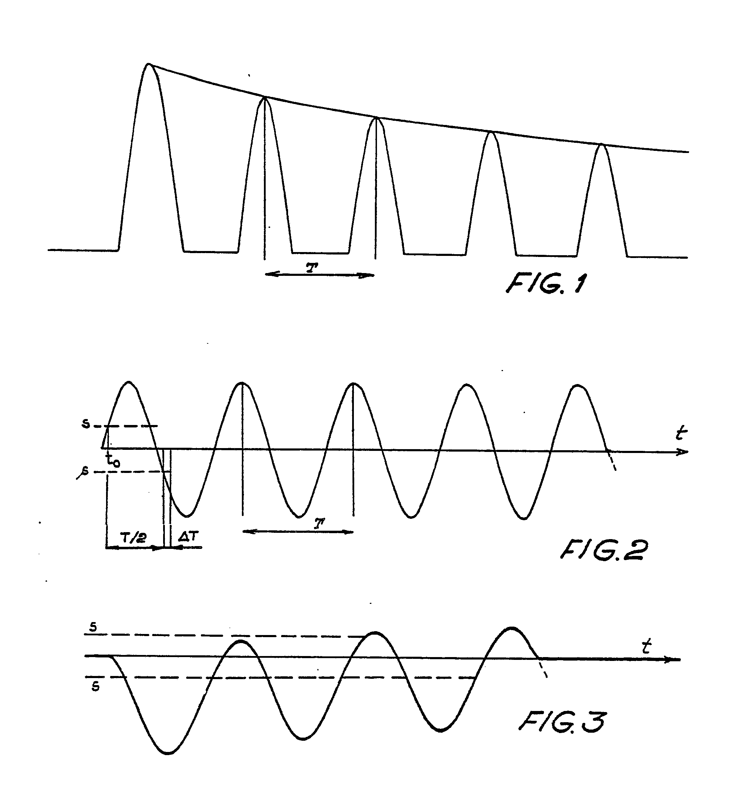

Pour atteindre ce résultat, l'invention utilise le fait que les courants magnétisants en régime transitoire présentent une variation en fonction du temps très différente de l'allure des courants de court-circuit en régimes permanent et transitoire. Comme le montre la Figure 1, la courbe représentative de l'intensité d'un courant magnétisant en régime transitoire, en fonction du temps t, se compose d'alternances d'amplitude élevée séparées par des alternances de signe opposé, pratiquement nulles. L'enveloppe des sommets des alternances décroît et tend vers zéro lorsqu'on se rapproche du régime permanent.

Au contraire, le courant de court-circuit en régime établi (Figure 2) correspond à une fonction sinusoïdale, de sorte que l'on retrouve la même amplitude, en valeur absolue, à intervalles T/2 (T étant la période, de 20 ms dans le cas d'un courant alternatif à 50 Hz).

Le problème est toutefois beaucoup moins simple qu'il n'apparaît au premier abord, car il peut y avoir établissement du courant de court-circuit avec un régime transitoire. L'asymétrie maximum correspond à une variation du courant en fonction du temps de la forme :

$$I = I_m[\sin(\omega t - \pi/2) + \exp(-t/\tau)] \tag{1}$$

Le second terme n'est important qu'à l'enclenchement du courant. La fonction devient assimilable à celle représentant le courant de défaut en régime établi dès que t dépasse $5\tau$ environ (Figure 3).

A priori, il pouvait sembler que la possible existence d'un régime totalement asymétrique lors de l'enclenchement écartait la possibilité de discrimination basée sur la différence d'allure des courants de court-circuit en régime permanent et du courant magnétisant. Un dispositif de protection suivant l'invention, permettant d'assurer une bonne discrimination en dépit de la possibilité d'une telle situation, est prévu pour effectuer, en cas de dépassement, une nouvelle comparaison au bout d'un temps égal à $(1/2)T + \Delta T$ (T étant la période nominale du courant alternatif et $\Delta T$ une fraction de T de l'ordre du dixième) après le dépassement et pour actionner des moyens de déclenchement du dispositif en cas de renouvellement du dépassement lors de la nouvelle comparaison.

Dans ce but, l'invention propose un dispositif de protection ampèremétrique sélectif conforme de la revendication 1.

Dans un mode avantageux de réalisation, les quatrièmes moyens (qui servent à effectuer la nouvelle comparaison) comprennent une première mémoire d'inscription du premier dépassement, un premier temporisateur de durée égale à $(1/2)T + \Delta T$ relié à la sortie de la première mémoire et un premier circuit ET dont la sortie est reliée à une entrée de remise à zéro de la première mémoire. Les entrées du premier circuit ET reçoivent l'une un signal en cas de dépassement de la valeur de seuil par le courant redressé et l'autre un signal de sortie du premier temporisateur. L'invention propose également un dispositif conforme aux parties caractérisantes des revendications 3 et 4.

Dans un mode de réalisation avantageux, le dispositif est constitué de composants statiques, à

2

transistors fonctionnant alternativement à l'état bloqué et à l'état saturé.

L'invention sera mieux comprise à la lecture de la description qui suit d'un dispositif qui en constitue un mode particulier de réalisation, donné à titre d'exemple non limitatif. La description se réfère aux dessins qui l'accompagnent, dans lesquels :

les Figures 1, 2 et 3 déjà mentionnées, sont des courbes représentatives de l'allure de la variation du courant magnétisant en régime transitoire, du courant de court-circuit en régime permanent et du courant de court-circuit en régime asymétrique lors de l'enclenchement ;

la Figure 4 est un synoptique de principe du dispositif ;

la Figure 5 est un schéma montrant une constitution possible des blocs du synoptique de la Figure 4 ;

les Figures 6A et 6B sont des schémas du détecteur et des temporisateurs de la Figure 5 ;

les Figures 7, 8 et 9 sont des chronogrammes montrant l'évolution en fonction du temps des tensions qui apparaissent aux points identifiés par les chiffres 1 à 10 sur les Figures 4, 5 et 6, respectivement en cas de détection d'un courant magnétisant en régime transitoire, d'un courant de court-circuit en régime permanent et d'un courant de court-circuit en régime asymétrique.

Avant de décrire le dispositif, on rappellera son principe de fonctionnement en se reportant à la Figure 2. Le dispositif détecte, à l'intant $t_0$, le dépassement de la valeur de seuil ou de consigne s par l'intensité du courant. Cet instant $t_0$ marque le début d'une temporisation $(1/2)T + \triangle T$, T étant la période nominale et $\triangle T$ un intervalle de temps qui sera habituellement choisi à une valeur égale à 10 % environ de la période. Dans ces conditions, la durée de la temporisation sera de 11 ms pour un réseau à 50 Hz où, en régime établi, on retrouve la même amplitude en valeur absolue toutes les 10 ms. Dans le cas d'un courant de court-circuit du genre montré en Figure 2, où les alternances sont symétriques, on se trouve dans des conditions idéales d'enclenchement et le dispositif fonctionnera 11 ms après avoir détecté un premier dépassement du seuil.

Si le rapport entre le courant de défaut et la valeur efficace du courant de seuil est suffisamment élevé (> 2), le dispositif fonctionne aussi rapidement. Par contre, si ce rapport est inférieur à 2, son fonctionnement pourra être retardé de quelques périodes et dépendra aussi de la constante de temps de l'installation (un L/R faible entraîne un fonctionnement plus rapide). Dans la pratique, on constate que l'allongement du temps de réponse ne devient notable que lorsque la valeur efficace du courant de défaut est très peu supérieure à la valeur de seuil, ce qui représente un inconvénient mineur, le niveau de protection étant bas. Dès que le rapport entre la valeur efficace du courant de défaut et la valeur efficace du courant de seuil dépasse 1,5, le temps de réponse redescend à une valeur de l'ordre de 15 ms pour un courant à 50 Hz.

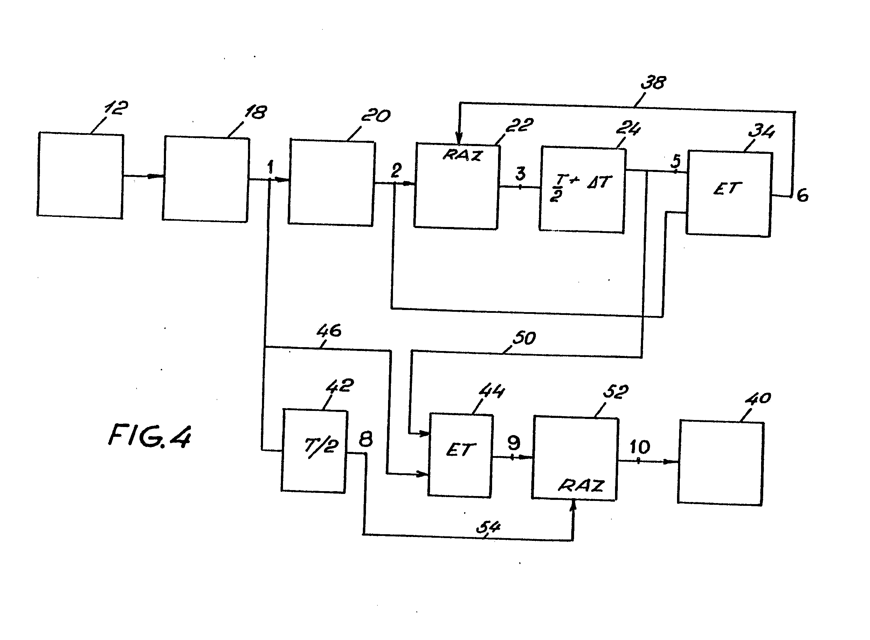

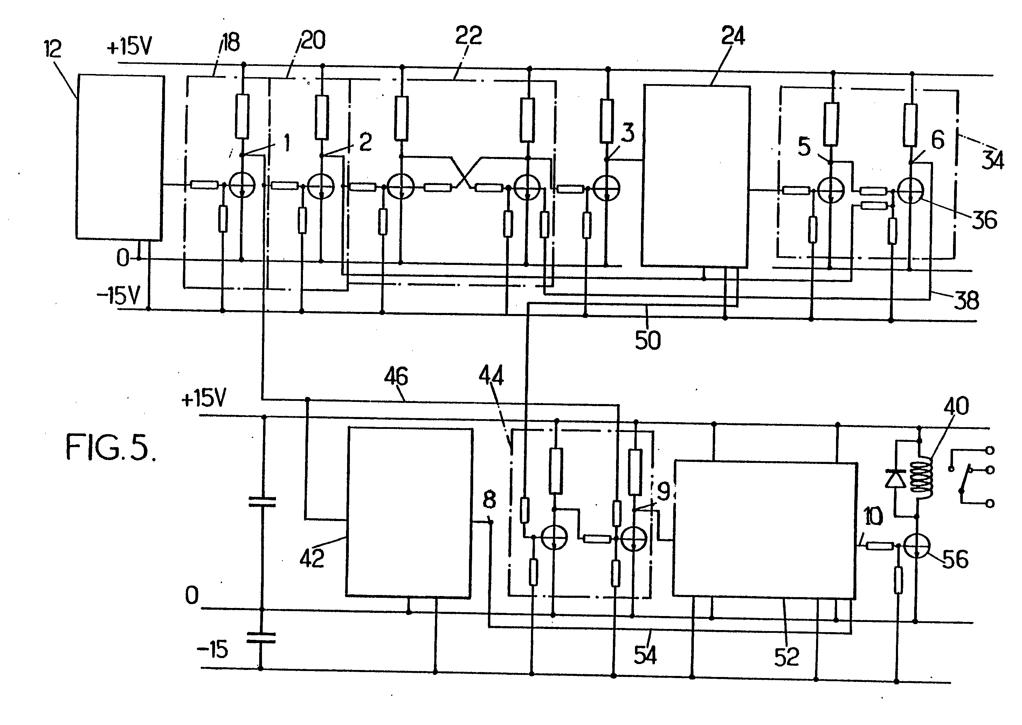

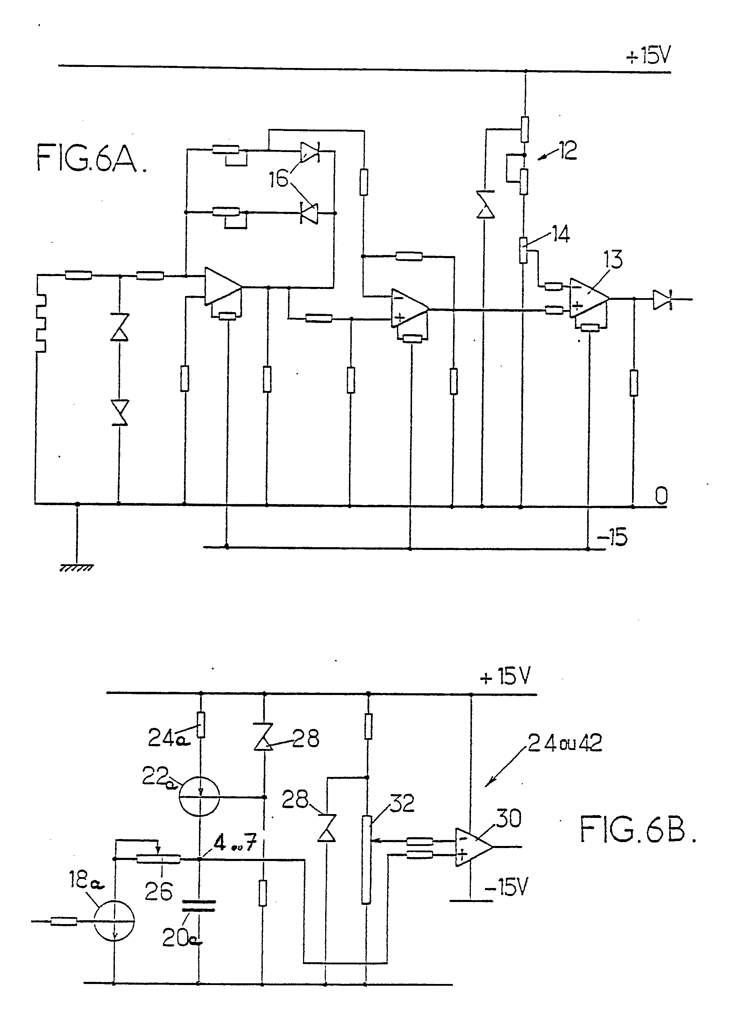

Le dispositif montré en Figure 4 sous forme de synoptique et dont un mode de réalisation, constitué en éléments statiques alimentés en tensions de + 15 V et — 15 V, est donné en Figure 5, comporte un élément d'entrée constitué par un circuit de détection et de redressement 12 qui reçoit un courant d'entrée d'un transformateur de courant monté sur la ligne à surveiller. Ce détecteur 12 comporte un amplificateur opérationnel 13 monté en différentiel et prévu pour fournir un signal de sortie pendant les intervalles de temps où le courant dans la ligne à surveiller dépasse une valeur de seuil ajustable à l'aide d'un potentiomètre 14 (Figure 6A). Le seuil de tension choisi sera généralement très faible, typiquement compris entre 0 et 1 V. En conséquence, le circuit de redressement associé doit être suffisamment élaboré pour que la tension directe des diodes redresseuses n'introduise pas d'erreur.

On peut en particulier utiliser le montage montré en Figure 6A, à deux branches comprenant chacune une diode 16.

Le circuit 12 redresseur et détecteur attaque un circuit de détection complémenté sous forme logique 18 fournissant alternativement une tension de sortie nulle ou égale à la tension d'alimentation (+ 15 V dans le cas illustré), mais complémentaire. Un circuit inverseur 20 situé à la sortie, comportant comme le précédent un transistor alternativement bloqué et saturé, permet de fournir sur sa sortie un signal logique de polarité adaptée à l'attaque d'un circuit mémoire 22. Ce circuit est encore réalisé à l'aide de transistors travaillant alternativement au blocage et à la saturation, par exemple des transistors NPN de type 2N 2221A montés en bascule. Cette mémoire de verrouillage 22 attaque à son tour un temporisateur 24 de durée $(1/2)T + \triangle T$. Ce temporisateur 24 peut avoir la constitution montrée en Figure 6B et comporter un transistor 18a qui, selon qu'il est conducteur ou bloqué, court-circuite le condensateur 20a ou permet sa charge à courant constant par l'intermédiaire d'un second transistor 22a. Pour avoir par exemple une tension de 4 V aux bornes du condensateur 20a, on adoptera une résistance 24a dans le circuit de charge, de 120 kOhm. Un potentiomètre 26 sera généralement placé dans le circuit de décharge du condensateur 20a, pour éviter l'oscillation de transfert des charges. L'amplificateur opérationnel de sortie 30, ayant une tension Zener de 5,1 V par exemple, passe de l'état — 15 V à l'état + 15 V dès que la tension aux bornes du condensateur 20a prend une valeur supérieure à une tension de référence ajustable à l'aide d'un potentiomètre 32.

Le temporisateur 24 et le détecteur 20 attaquent un circuit ET 34 constitué par deux montages similaires à ceux adoptés pour les circuits 18 et 20. Le transistor 36 de sortie de ce circuit ET est alternativement bloqué et saturé. La sortie du circuit ET 36 est ramenée par un conducteur 38 à l'entrée de remise à zéro de la mémoire 22.

La partie du dispositif constituée des circuits 20, 22, 24 et 34 peut être regardée comme destinée à assurer la discrimination. Le relais électromagnétique de sortie 40 destiné à effectuer le déclenchement est commandé par une seconde branche qui comprend un circuit de temporisation d'entrée 42 identique au circuit 24 mais avec une temporisation T/2, et d'un circuit de test 44 formé par un circuit ET ayant la même constitution que le circuit 34. Ce circuit ET 44 reçoit le signal direct provenant du circuit 18, avant temporisation, par un conducteur 46, et le signal de sortie du temporisateur 24, par un conducteur 50. Le circuit temporisé 42 a pour rôle de commander la remise à zéro d'une mémoire 52, identique à la mémoire 22, par un conducteur 54. Enfin, la sortie de la mémoire 52 attaque le relais 40 par l'intermédiaire d'un transistor de commutation 56.

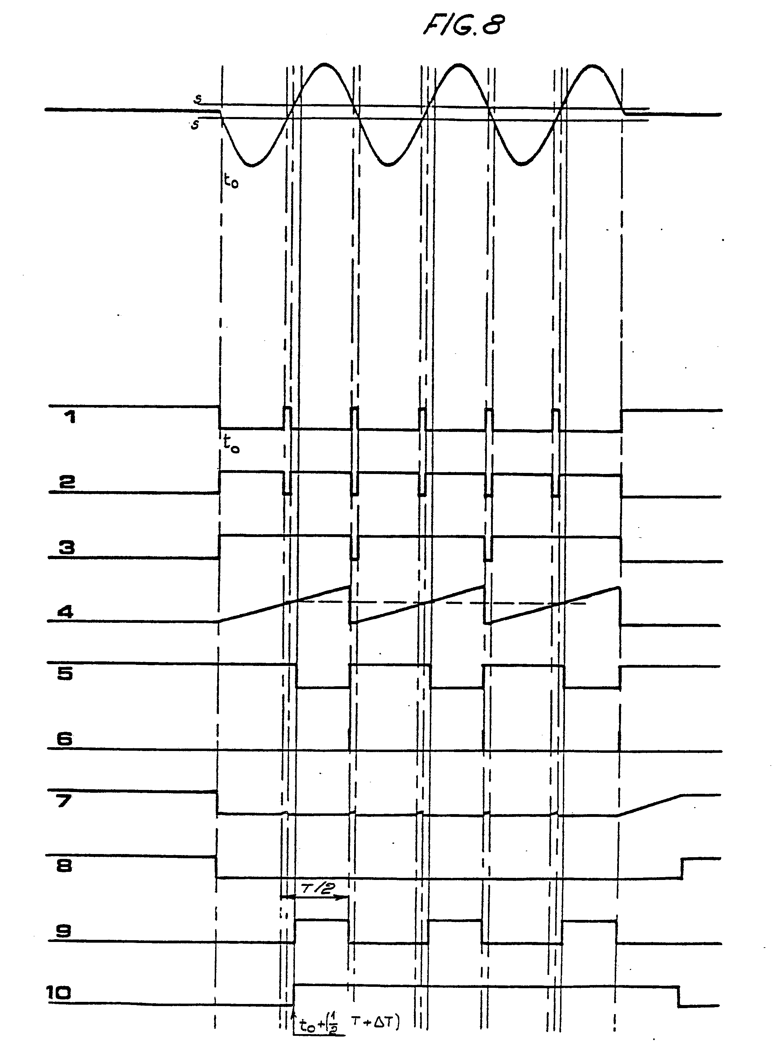

Le fonctionnement du dispositif lors d'un courant de court-circuit en régime permanent, c'est-à-dire dans le cas le plus favorable, est illustré sur la Figure 8. Les lignes situées de part et d'autre de l'origine de la trace déterminent le point de consigne de la protection.

A l'instant $t_0$ où le courant dépasse pour la première fois le seuil s, il y a inversion des sorties des détecteurs 18 et 20 (lignes 1 et 2). Le changement de niveau logique au point 2 s'inscrit en mémoire 22 à l'instant $t_0$ (ligne 3). Le changement de niveau à la sortie de la mémoire 3 provoque la charge à courant constant du condensateur 20a du temporisateur 24, dont le seuil de basculement est choisi pour correspondre à une durée de temporisation $(1/2)T + \Delta T = 11$ ms. En conséquence, la sortie du temporisateur 24 change de niveau logique à l'instant $t_0 + 11$ ms. Entre temps, la sortie des circuits 18 et 20 est revenue dans son état initial pendant le laps de temps au cours duquel la valeur du courant est inférieure au seuil, puis s'est à nouveau inversée, de sorte qu'à aucun moment la porte ET 34 n'a vu ses deux entrées excitées. Elle ne fournit donc pas de sortie de retour à zéro sur la ligne 38.

Parallèlement, le temporisateur 42, de durée T/2 = 10 ms s'est trouvé mis en route à l'instant $t_0$. Mais la durée de charge du condensateur 20a de ce circuit 42 se limite à l'intervalle de temps pendant lequel le courant est inférieur au seuil (ligne 7). En conséquence, le circuit 42 ne peut à aucun moment fournir un signal de remise à zéro à la mémoire 52 et il en sera de même lors des alternances suivantes. A la première alternance qui suit celle au cours de laquelle le courant a dépassé le seuil, à l'instant $t_0 + (1/2)T + \Delta T$, le circuit ET 44 reçoit des signaux sur ses deux entrées, en provenance des points 1 et 5 (ligne 9) et excite le relais 40. Le déclenchement intervient et est maintenu jusqu'à l'élimination du défaut + T/2.

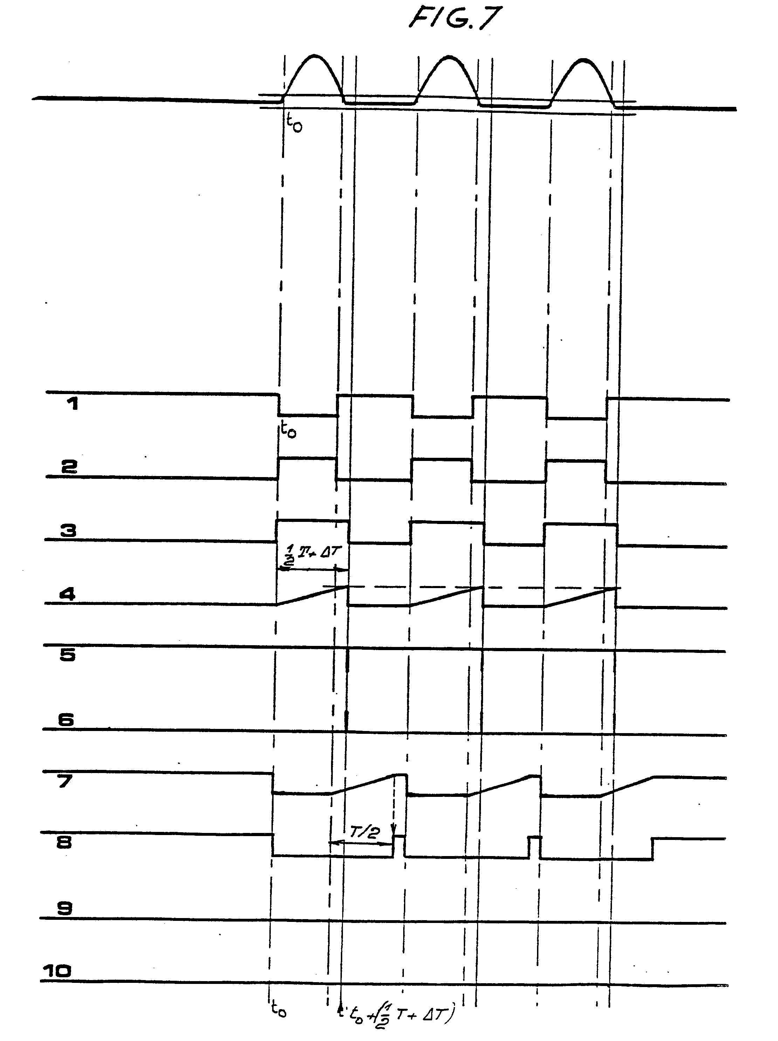

Dans le cas, au contraire, d'un courant magnétisant en régime transitoire, ayant l'allure montrée sur la ligne du haut de la Figure 7, il y a remise à zéro de la mémoire 22 à l'instant $t_0 + (1/2)T + \Delta T$, comme le montre la ligne 3, à l'apparition d'une impulsion de sortie du circuit ET 34 (ligne 6). A aucun moment il n'y a inscription dans la mémoire 52, le circuit ET 44 ne fournissant pas de sortie (ligne 9) du fait que ses deux entrées ne sont jamais simultanément excitées. En effet, un signal de détection n'apparaît à la sortie du détecteur (ligne 1) qu'à chaque alternance de courant magnétisant et le signal de sortie du temporisateur 24 (ligne 5) n'apparaît qu'après la fin de cette alternance.

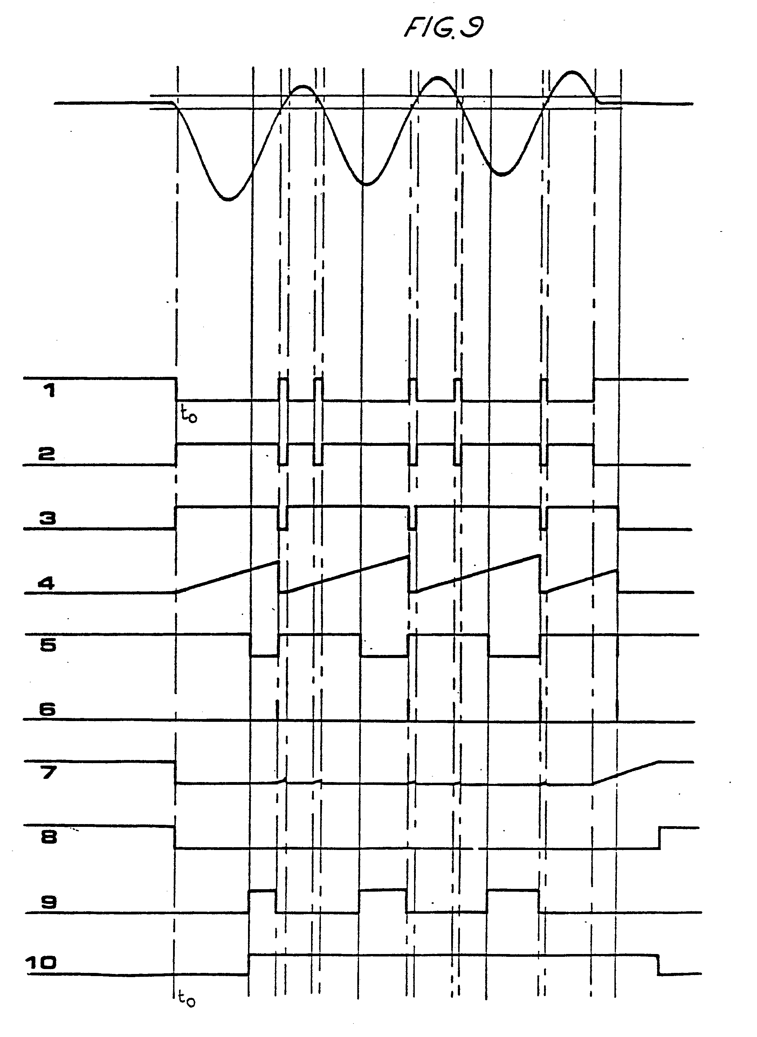

Enfin, en cas de courant de court-circuit en régime asymétrique, on voit que, même pour une forte asymétrie, il y a encore inscription en mémoire 52 sans remise à zéro même pour une forte composante de courant magnétisant (Figure 9).

## Revendications

1. Dispositif de protection ampèremétrique sélectif contre les surintensités de courant, destiné à fonctionner en courant alternatif, comprenant des premiers moyens (12) de détection et de redressement des deux alternances du courant, des deuxièmes moyens (18) fournissant un signal (1) lorsque la valeur instantannée du courant redressé est supérieure à une valeur de seuil (s) et des troisièmes moyens (40) de déclenchement du dispositif, caractérisé en ce qu'il comprend en outre des quatrièmes moyens (20, 22, 24, 34) recevant le signal émis par les deuxièmes moyens (18) et fournissant un signal (5) au bout d'une durée de temporisation égale à $(1/2)T + \Delta T$ commençant à partir d'un premier dépassement de la valeur de seuil (s) par le courant redressé, T étant la période nominale du courant alternatif et $\Delta T$ une fraction de cette période de l'ordre du dixième, et des cinquièmes moyens (42, 44, 52) recevant les signaux (1, 5) produits par les deuxièmes (18) et quatrièmes (20, 22, 24, 34) moyens et actionnant les troisièmes moyens (40) pour effectuer un déclenchement du dispositif uniquement en cas de dépassement de la valeur du seuil (s) par le courant redressé au bout de la durée de temporisation des quatrièmes moyens (20, 22, 24, 34).

2. Dispositif selon la revendication 1, caractérisé en ce que les quatrièmes moyens comprennent une première mémoire (22), d'inscription du premier dépassement, un premier temporisateur (24) de durée égale à $(1/2)T + \Delta T$ relié à la sortie de la première mémoire, et un premier circuit ET dont la sortie est reliée à une entrée de remise à zéro de la première mémoire (22) et dont les entrées reçoivent l'une un signal (2) en cas de dépassement de la valeur de seuil par le courant redressé et l'autre un signal de sortie (s) du premier temporisateur (24).

3. Dispositif selon la revendication 2, caractérisé en ce que les cinquièmes moyens comprennent un second temporisateur (42) de durée approximativement égale à T/2, qui reçoit un signal (1) représentatif de chaque dépassement de la valeur de seuil par le courant redressé et dont la sortie est reliée à l'entrée de remise à zéro d'une seconde mémoire (52) dont l'entrée d'inscription reçoit le signal (9) de sortie d'un circuit de test (44) appartenant aux cinquièmes moyens.

4

4. Dispositif selon la revendication 3, caractérisé en cè que le circuit de test est constitué par un second circuit ET (44) dont une entrée reçoit le signal (1) qui est également appliqué à l'entrée du second temporisateur (42) et dont la seconde entrée reçoit le signal (5) de sortie du premier temporisateur (24) de durée (1/2)T + $\triangle$T.

5. Dispositif selon l'une quelconque des revendications précédentes, caractérisé en ce que le dispositif est constitué de composants statiques, à transistors fonctionnant alternativement à l'état bloqué et à l'état saturé.

## Claims

1. A selective overcurrent protection device for AC operation, comprising : first means (12) for detecting and rectifying the two half waves of the current, second means (18) delivering a signal (1) when the instantaneous value of the rectified current is superior to a threshold value (s) and third means (40) for tripping the device, characterized in that it further comprises fourth means (20, 22, 24, 34) for receiving the signal emitted by second means (18) and delivering a signal (5) after a time delay equal to (1/2)T + $\triangle$T starting after first overshoot of the threshold value (s) by the rectified current, T being the nominal period of the AC and $\triangle$T a fraction of T of the order of a tenth, and fifth means (42, 44, 52) receiving the signals (1, 5) delivered by the second (18) and fourth (20, 22, 24, 34) means and actuating the third means (40) for tripping the device only when an overshoot of the threshold value (s) by the rectified current is detected after the time delay of the fourth means (20, 22, 24, 34).

2. A device according to claim 1, characterized in that the fourth means comprise a memory (22), for storing the threshold, a timer (24) for providing a time delay (1/2)T + $\triangle$T connected to the output of the memory, and an AND gate with an output connected to a reset to zero input of the memory (22) and in that the inputs receive, for one, a signal in case of overshoot and, for the other one, a signal from the output of the timer (24).

3. A device according to claim 2, characterized in that the fifth means comprise a second timer (42) providing a time delay substantially equal to T/2, connected to receive a signal representative of each overshoot and whose output is connected to a reset to zero input of a second memory (52) having a write in input which receives the output signal from a test circuit (44) belonging to the fourth means for providing a signal after a time equal to (1/2)T + $\triangle$T has elapsed.

4. A device according to claim 3, characterized in that the test circuit consists of a second AND gate (44) having an input connected to receive the signal which is also applied to the input of the second timer (24) and a second input connected to receive the output signal of the first timer (24) of duration (1/2)T + $\triangle$T.

5. A device according to anyone of the preceding claims, characterized in that the device consists of solid state static components, with transistors operating alternately in cut off conditions and in saturated condition.

## Patentansprüche

1. Vorrichtung für den selektiven Stromschutz gegen Überstrom beim Betrieb mit Wechselstrom, mit ersten Mitteln (12) zum Nachweisen und Gleichrichten von zwei Stromwechselfolgen, mit zweiten Mitteln (18), die ein Signal (1) liefern, wenn der augenblickliche Wert des gleichgerichteten Stroms größer als ein Schwellwert (s) ist, und mit dritten Mitteln (40) zum Auslösen der Vorrichtung, dadurch gekennzeichnet, daß sie außerdem enthält : vierte Mittel (20, 22, 24, 34), die das von den zweiten Mitteln (18) ausgesandte Signal empfangen und ein Signal (5) am Ende einer Verzögerungsdauer liefern, die gleich (1/2)T + $\triangle$T ist, beginnend ab einer ersten Überschreitung des Schwellwertes (s) durch den gleichgerichteten Strom, wobei T die Nennperiode des Wechselstromes und $\triangle$T ein Bruchteil dieser Periode in der Größenordnung von 1/10 sind, und fünfte Mittel (22, 24, 52), die die von den zweiten (18) und vierten (20, 22, 24, 34) Mitteln erzeugten Signale (1, 5) empfangen und die dritten Mittel (40) betätigen, um eine Auslösung der Vorrichtung ausschließlich im Fall einer Überschreitung des Schwellwertes (s) durch den gleichgerichteten Strom am Ende der Verzögerung der vierten Mittel (20, 22, 24, 34) zu bewirken.

2. Vorrichtung nach Anspruch 1, dadurch gekennzeichnet, daß die vierten Mittel enthalten : einen ersten Speicher (22) zum Aufzeichnen der ersten Überschreitung, einen ersten Verzögerer (24) mit einer Dauer von (1/2)T + $\triangle$T, der mit dem Ausgang des ersten Speichers verbunden ist, und ein erstes UND-Glied, dessen Ausgang mit einem Nullstelleingang des ersten Speichers (22) verbunden ist und von dessen Eingängen der eine ein Signal (2) im Fall des Überschreitens des Stellwertes des gleichgerichteten Stroms und der andere ein Ausgangssignal (s) des ersten Verzögerers (24) empfangen.

3. Vorrichtung nach Anspruch 2, dadurch gekennzeichnet, daß die fünften Mittel einen zweiten Verzögerer (42) mit einer Dauer von ungefähr T/2 aufweisen, der ein Signal (1) empfängt, das repräsentativ ist für jedes Überschreiten des Stellwertes durch den gleichgerichteten Strom und dessen Ausgang mit dem Nullstelleingang eines zweiten Speichers (52) verbunden ist, dessen Aufzeichnungseingang das Ausgangssignal (9) eines zu den fünften Mitteln gehörenden Testkreises (40) empfängt.

4. Vorrichtung nach Anspruch 3, dadurch gekennzeichnet, daß der Testkreis durch ein zweites UND-Glied (44) gebildet ist, von dem ein Eingang das Signal (1) empfängt, das ebenfalls auf den Eingang des zweiten Verzögerers (42) gegeben wird, und von dem der zweite Eingang das Ausgangssignal (5) des ersten Verzögerers (24) mit der Dauer (1/2)T + $\triangle$T empfängt.

5. Vorrichtung nach einem der vorhergehenden Ansprüche, dadurch gekennzeichnet, daß die Vorrichtung aus statischen Komponenten mit Transistoren besteht, die abwechselnd im blockierten und im gesättigten Zustand arbeiten.

FIG. 1

FIG. 2

FIG. 3

FIG.4

FIG.5.

FIG.6A.

FIG.6B.

# FIG.7

FIG.8

FIG. 9

7